# EUROPÄISCHE PATENTANMELDUNG

(11) **EP 2 915 952 A1**
(43) Veröffentlichungstag der Anmeldung: **09.09.2015**
(21) Anmeldenummer: 15156659.3
(22) Anmeldetag: 26.02.2015
(51) Int. Cl.: F01C 1/12, F04C 18/12

(54) **Generatorvorrichtung und Verfahren zur Expansion eines energiegeladenen Prozessfluids**

(30) Priorität: 04.03.2014 CH 3082014
(71) Anmelder: Ballmer, Daniel, 4424 Arboldswil (CH)
(72) Erfinder: Schmid, Martin, 4438 Langenbruck (CH)
(74) Vertreter: Schneider Feldmann AG Patent- und Markenanwälte

(57) **Zusammenfassung**

Es soll eine Generatorvorrichtung (0), welche an einen Prozessfluidkanal (4) ankoppelbar ist und mit einem energiegeladenen Prozessfluid beaufschlagbar ist, zur Umwandlung elektrischer Energie aus dem energiegeladenen Prozessfluid, geschaffen werden, mit welcher energiegeladene Prozessfluide flexibel, aus verschiedenen Quellen stammend zur Erzeugung elektrischer Energie ausnutzbar sind. Dies wird dadurch erreicht, dass die Generatorvorrichtung (0) eine Einklauenpumpe (1) aufweist, welche mit dem Prozessfluidkanal (4) verbindbar ist, sodass energiegeladenes Prozessfluid über mindestens einen Einlass in einen Innenraum der Einklauenpumpe führbar ist und im Innenraum durch Rotation eines ersten und zweiten Rotors expandierbar ist, wobei die resultierende mechanische Energie mittels eines mit den Rotoren wirkverbundenen Generators (5) in elektrische Energie umwandelbar ist und anschliessend expandiertes Prozessfluid durch einen Auslass aus der Einklauenpumpe (1) heraus, eine Auslassleitung (7) querend an die Umgebung abgebbar ist.

## Beschreibung

### Technisches Gebiet

Die vorliegende Erfindung beschreibt eine Generatorvorrichtung, welche an einen Prozessfluidkanal ankoppelbar ist und mit einem energiegeladenen Prozessfluid beaufschlagbar ist, zur Umwandlung elektrischer Energie aus dem energiegeladenen Prozessfluid, ein Verfahren zur Expansion eines energiegeladenen Prozessfluids aus einem Prozessfluidkanal zur Umwandlung mechanischer Energie in elektrische Energie, sowie Verwendung einer Einklauenpumpe zur Umwandlung von mechanischer Energie in elektrische Energie.

### Stand der Technik

Energieeffizienz ist in den letzten Jahren noch stärker in das Bewusstsein gerückt. Eine zusätzliche energetische Nutzung energiegeladener Prozessfluide, beispielsweise Abgase aus unterschiedlichen Verbrennungsvorrichtungen, insbesondere Industrieanlagenabgase, Abfackelungsabgase oder Abgase aus Blockheizkraftwerken verschiedener Arten, Dämpfe aus verschiedenen Quellen, beispielsweise Wasserdampf oder Dampf organischer Stoffe oder sogar Pressluft oder allgemein komprimierte Gase in einem Temperaturbereich unterhalb Raumtemperatur bis einige hundert Grad Celsius, findet in vielen Bereichen statt. Dabei wird versucht, möglichst viel Energie bzw. Exergie der Prozessfluide zusätzlich zu nutzen. Das einfache Ablassen von Pressluft oder das vergeuden von Abgasen wird heute vermieden.

Dazu sind einige Generatorvorrichtungen entwickelt worden, die genau zu diesem Zweck, der zusätzlichen Nutzung der Energie von Abgasen und Dämpfen, beispielsweise in Industrieanlagen, einsetzbar sind. Die bekannten Generatorvorrichtungen, wie Gasturbinen lohnen sich nur für ausreichende Mengen von Abgasen, sind für kleiner Projekte oft zu teuer oder nicht kompatibel mit der Art des Prozessfluids.

### Darstellung der Erfindung

Die vorliegende Erfindung hat sich zur Aufgabe gestellt eine Generatorvorrichtung zu schaffen, mit welcher energiegeladene Prozessfluide flexibel, aus verschiedenen Quellen stammend zur Erzeugung elektrischer Energie ausnutzbar sind. Die vorgestellte Generatorvorrichtung sollte mit einfachen Mitteln, wenigen Vorrichtungsbauteilen kostengünstig hergestellt bzw. betrieben werden können.

Die Aufgabe löst eine Generatorvorrichtung, welche eine spezielle Pumpe zur Umwandlung von mechanischer Energie in elektrische Energie nutzt. Der neuartige Einsatz einer Einklauenpumpe führt zu wunschgemässen Generatorvorrichtungen. Die Einklauenpumpe stellt ein System, ohne Ventile und weitestgehend ohne Reibung der Bauteile dar. Versuche haben gezeigt, dass ausschliesslich eine Einklauenpumpe mit einer Klaue pro Rotor zu gewünschten Ergebnissen führt.

### Kurze Beschreibung der Zeichnungen

Bevorzugte Generatorvorrichtungen, sowie die Verwendung einer Einklauenpumpe als Teil einer Generatorvorrichtung werden nachstehend im Zusammenhang mit den anliegenden Zeichnungen beschrieben.
- Figur 1a: perspektivische Ansicht einer Einklauenpumpe von einer Getriebeseite, während
- Figur 1b: eine perspektivische Ansicht der Einklauenpumpe gemäss Figur 1a von einer Mediumanschlussseite zeigt.

- Figuren 2a bis 2f: zeigen Ansichten einer Einklauenpumpe mit geöffnetem Gehäuse in unterschiedlichen Stellungen des ersten und zweiten Rotors.
- Figur 3: zeigt eine Ansicht einer Einklauenpumpe mit geöffnetem Gehäuse, wobei eine Kühlvorrichtung im Innenraum angeordnet ist.
- Figuren 4a bis 4c: zeigen schematische Ansichten verschiedener Generatorvorrichtungen, welche jeweils eine Einklauenpumpe als Expander aufweisen.

### Beschreibung

Die hier beschriebene Generatorvorrichtung zur Erzeugung elektrischer Energie durch Expansion eines energiegeladenen Prozessfluids umfasst einen Expander in Form einer Einklauenpumpe 1. Derartige Einklauenpumpe 1 sind Verdrängerpumpen und aus der Beschichtungstechnik bzw. Vakuumtechnik für den Grobvakuumbereich bekannt, werden hier aber andersartig eingesetzt.

Diese Einklauenpumpe 1 wird nicht als Pumpe betrieben, sondern mit dem energiegeladenen Prozessfluid beaufschlagt. Bei der Verwendung der Einklauenpumpe 1 als Expander wird die Energie des energiegeladenen Prozessfluids zum Betrieb der Einklauenpumpe 1 genutzt. Das Enthalpiegefälle des einströmenden ernergiegeladenen Prozessfluids wird in mindestens einer Stufe in mechanische Arbeit umgewandelt, woraus anschliessend elektrische Energie generiert wird. Die Einklauenpumpe 1 expandiert das Prozessfluid und entzieht diesem Energie, welche schlussendlich als elektrische Energie bereitgestellt wird. Das expandierte Prozessfluid, welchem Energie entzogen wurde, wird anschliessend an die Umgebung als Abgas abgegeben oder kann anschliessend noch weiterverwendet werden.

Als energiegeladenes Prozessfluid können Abgase aus unterschiedlichen Verbrennungsvorrichtungen, insbesondere Industrieanlagenabgase, Abfackelungsabgase oder Abgase aus Blockheizkraftwerken verschiedener Arten, Dämpfe aus verschiedenen Quellen, beispielsweise Wasserdampf oder Dampf organischer Stoffe oder sogar Pressluft oder allgemein komprimierte Gase in einem Temperaturbereich unterhalb Raumtemperatur bis einige hundert Grad Celsius verwendet werden. Die hier vorgestellte Einklauenpumpe 1 bzw. die Generatorvorrichtung 0 kann im Über- als auch im Unterdruck betrieben werden, d.h. die Expansion kann von Überdruck von Umgebungsdruck, von Umgebungsdruck nach Unterdruck, oder von Überdruck nach Unterdruck durchgeführt werden.

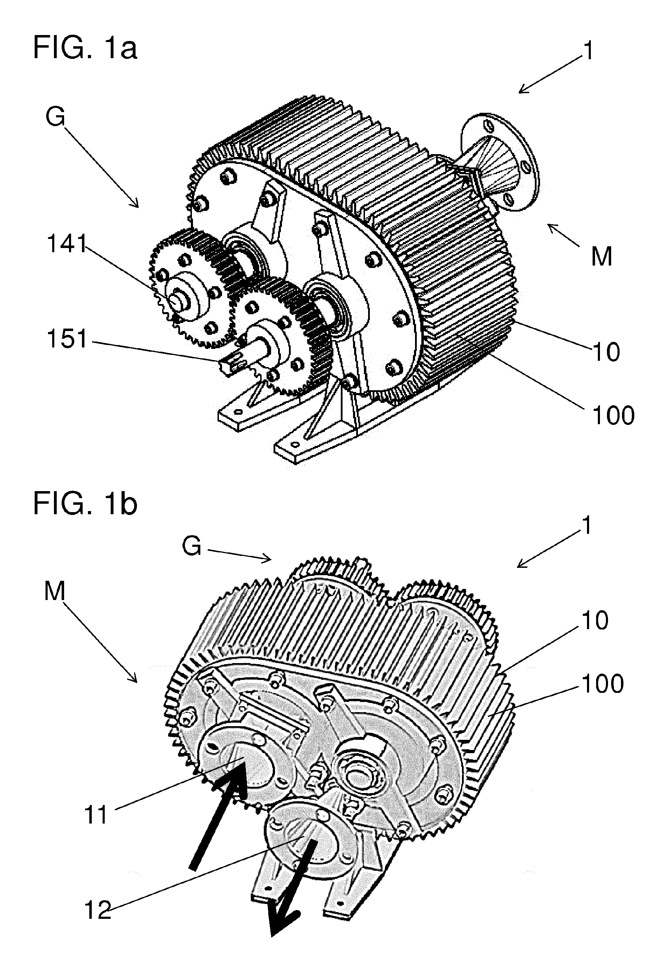

In Figur 1a ist die Einklauenpumpe 1 am Beispiel einer einstufigen Einklauenpumpe 1 von einer Getriebeseite G aus gesehen, gezeigt. Die Einklauenpumpe 1 umfasst ein Gehäuse 10, welches hier eine Mehrzahl von Kühlrippen 100 aufweist, sodass Wärme beim Betrieb an die Umgebungsluft abgeführt werden kann. An einer ersten Rotorwelle 141 ist ausserhalb des Gehäuses 10 ein erstes Getrieberad und an einer zweiten Rotorwelle 151 ist ein zweites Getrieberad befestigt. Beide Rotorwellen 141, 151 ragen aus dem Gehäuse 10 zur Getriebeseite G heraus und sind miteinander wirkverbunden, sodass bei Rotation der Getrieberäder vom Getriebe mechanische Energie in elektrische Energie umwandelbar ist. Der Fachperson sind verschiedene Arten von Getrieben, Möglichkeiten zur Energieumwandlung bekannt, sowie Abdichtungen der Rotorwellen zwischen Gehäuse 10 und Umgebung bekannt, weshalb darauf hier nicht weiter eingegangen wird.

An einer Mediumanschlussseite M der Einklauenpumpe 1, der Getriebeseite G des Gehäuses 10 gegenüberliegend, im Hintergrund der Figur 1a bzw. Vordergrund der Figur 1b dargestellt, ist ein Einlass 11 und ein Auslass 12 angeordnet. Der Einlass 11 kann mit einem hier nicht dargestellten Prozessfluidkanal direkt oder indirekt verbunden werden, sodass die Einklauenpumpe 1 mit energiegeladenem Prozessfluid aus dem Prozessfluidkanal beaufschlagt werden kann. Durch eine Einlassöffnung des Einlasses 11 wird das energiegeladene Prozessfluid in einen Innenraum 13 des Gehäuses 10 geführt.

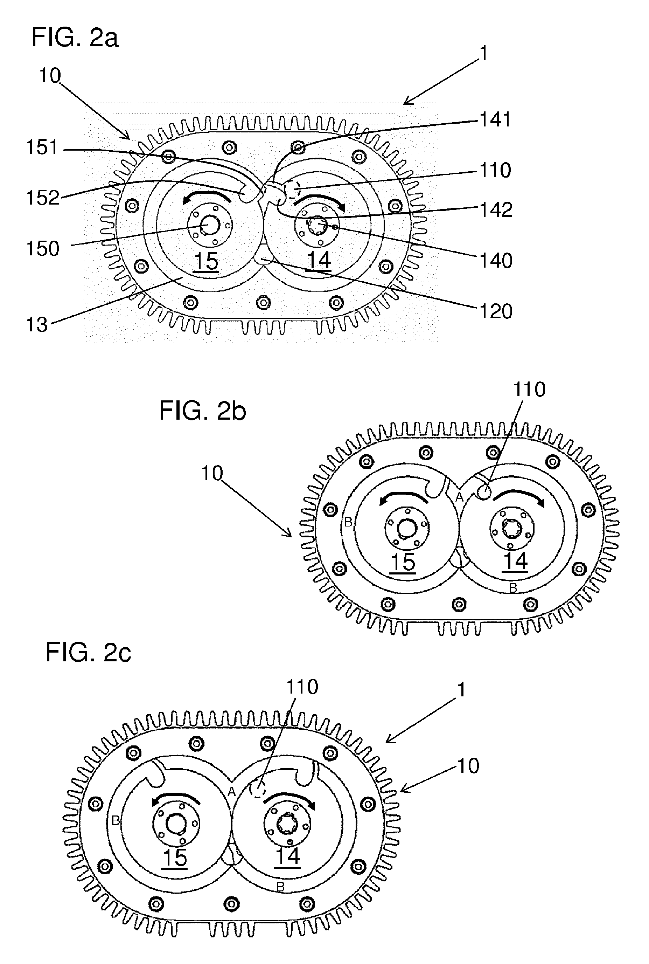

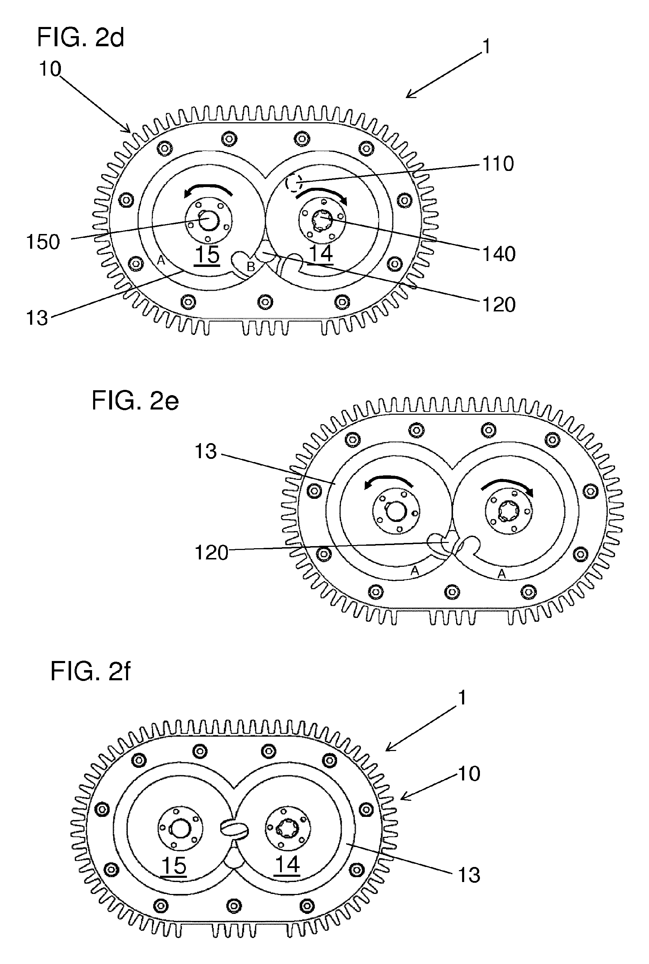

In den Figuren 2a bis 2f ist ein Expander in Form einer Einklauenpumpe 1 gezeigt, welche über den Einlass 11 mit energiegeladenem Prozessfluid beaufschlagt ist. Es sind verschiedene Funktionszustände gezeigt.

Im Innenraum 13 der Einklauenpumpe 1 sind ein erster Rotor 14 und ein zweiter Rotor 15 in unterschiedliche Drehrichtungen, jeweils an der ersten Rotorwelle 141 und an der zweiten Rotorwelle 151 rotierbar gelagert. Da die Rotoren 14, 15 bzw. ihre Rotorwellen 141, 151 mittels Getriebe synchronisiert drehbar sind, ist eine synchronisierte Rotation der Rotoren 14, 15 gesichert. Die Phasenlage der Rotoren 14, 15 bleibt dabei gleich. Der erste Rotor 14 weist eine Klaue 140 und der zweite Rotor eine Klaue 150 auf. Bei der synchronen Rotation der beiden Rotoren 14, 15 werden die Klauen 140, 150 synchron mitbewegt, wobei sie je nach Stellung der Rotoren 14, 15 in eine erste Klauenaussparung 142 oder eine zweite Klauenaussparung 152 eingreifen können. Die Rotoren 14, 15 weisen jeweils ein spezielles Rotorprofil auf, wobei beide Rotoren 14, 15 berührungslos gegeneinander rotiert werden und eine Dichtung zwischen den Rotoren 14, 15 und den Innenwänden des Innenraumes 13 vorgesehen ist. Durch die angeformten Klauen 140, 150, welche gasdicht an den Innenwänden des Innenraumes 13 vorbeigeführt werden, wird der Innenraum 13 in unterschiedliche Kammern bzw. Teilräume unterteilt, in welchen sich unterschiedliche Gasdrücke ausbilden können. Bei der synchronen gegenläufigen Rotation der Rotoren 14, 15 werden periodisch eine Einlassöffnung 110 und eine Auslassöffnung 120 geöffnet und geschlossen. Da die Einlassöffnung 110 in Figur 2a vom ersten Rotor 14 vollständig verdeckt ist, ist die Einlassöffnung 110 gestrichelt dargestellt. Das energiegeladene Prozessfluid kann von einem hier nicht dargestellten Prozessfluidkanal durch die Einlassöffnung 110 in den Innenraum 13 strömen.

Im Folgenden werden die unterschiedlichen gegenläufigen Stellungen beider Rotoren 14, 15 bzw. die Arbeitstakte bei Beaufschlagung der Einklauenpumpe 1 mit energiegeladenem Prozessfluid, hier Abgas bzw. Dampf mit Temperaturen von mehr als 500°C beschrieben. In den hier vorgestellten Beispielen wurde von einem Abgas aus einem Kolbenmotor einer Temperatur von 530°C ausgegangen, womit eine Expansionsendtemperatur von 340°C erreicht werden kann. Wie erwähnt, ist aber auch der Einsatz von Pressluft bei tiefen Temperaturen möglich.

Wie sich in Versuchen gezeigt hat, setzt eine gegenläufige Rotation der Rotoren 14, 15 ein, sobald und solange eine Druckdifferenz besteht, d.h. sowohl solange die Einlassöffnung 110 noch offen ist, als auch danach, wenn die Einlassöffnung 110 geschlossen ist. Dem energiegeladenen Prozessfluid wird aber erst durch die Expansion, d.h. nach dem Schliessen der Einlassöffnung 110 Energie entzogen.

Die Einklauenpumpe 1 läuft an, wenn der Druck auf der einen Seite der Klauen 140, 150 höher ist, als auf der anderen. Diese Differenz ist sogar am höchstens, solange die Einlassöffnung 110 geöffnet ist. Sobald die Einlassöffnung 110 geschlossen ist, beginnt nämlich der Druck und somit auch die Druckdifferenz zu sinken.

Wenn die Einlassöffnung 110, wie in Figur 2b gezeigt, geöffnet ist, wird der durch die Klauen 140, 150 abgegrenzte Raum A mit energiegeladenem Prozessfluid beaufschlagt und die Rotoren 14, 15 beginnen eine gegenläufige Rotation.

Das einströmenden, nicht dargestellte, Prozessfluid erzeugt ein Drehmoment durch die Druckdifferenz zwischen den, in Drehrichtung rückwärtigen Seiten der beiden Klauen 140, 150 zur Vorderseite der Klauen 140, 150. Es findet eine adiabatische Expansion statt. Je nach Verhältnis der Temperaturen und Drücke des energiegeladenen Prozessfluids kann die Form der Einlassöffnung 110, z.B. die Länge der Einlassöffnung 110 in Drehrichtung, angepasst werden, beispielsweise durch Einsetzen von schraub- oder schiebbaren Zylindern. Hier ist eine etwa kreisförmig gestaltete Einlassöffnung 110 gezeigt.

Nach dem Schliessen der Einlassöffnung 110 durch Überfahren der Einlassöffnung 110 mit dem soliden Teil des ersten Rotors 14, beginnt die Expansion des eingelassenen energiergeladenen Prozessfluids, d.h. der Druck in Raum A wird reduziert, da der Raum A durch die gegenläufige Rotation vergrössert wird, wobei der Druck in Raum A aber höher bleibt als in Raum B. Die durch die Energie des einströmenden Prozessfluids angetriebenen Rotoren 14, 15 setzen ihre Rotationsbewegung trotz geschlossener Einlassöffnung 110 fort.

Die Bewegung der Rotoren 14, 15 wird weiter fortgesetzt, wobei eine adiabatische Expansion abläuft, bis die Auslassöffnung 120 freigelegt ist. Dann kann das expandierte Prozessfluid aus dem Innenraum 13 entweichen. Dieser Vorgang beginnt in Figur 2e. Die Rotoren 14, 15 rotieren weiter, bis die Klaue 140 des ersten Rotors 14 die Fläche der Auslassöffnung 120 überstreicht. Anschliessend kann das entspannte Prozessfluid aus Raum A durch die Auslassöffnung 120 und den Auslass 12 aus der Einklauenpumpe 1 entweichen.

Durch das Eingreifen der Klaue 140 in die zweite Klauenaussparung 152 und gleichzeitigem Eingreifen der Klaue 150 in die erste Klauenaussparung 142 rotieren die beiden Rotoren 14, 15 ungestört aneinander vorbei wieder in Richtung Ausgangslage gemäss Figur 2a, sodass ein weiterer Expansionszyklus durchlaufen kann. Im gesamten Inneraum 13 herrscht in diesem Moment derselbe Druck.

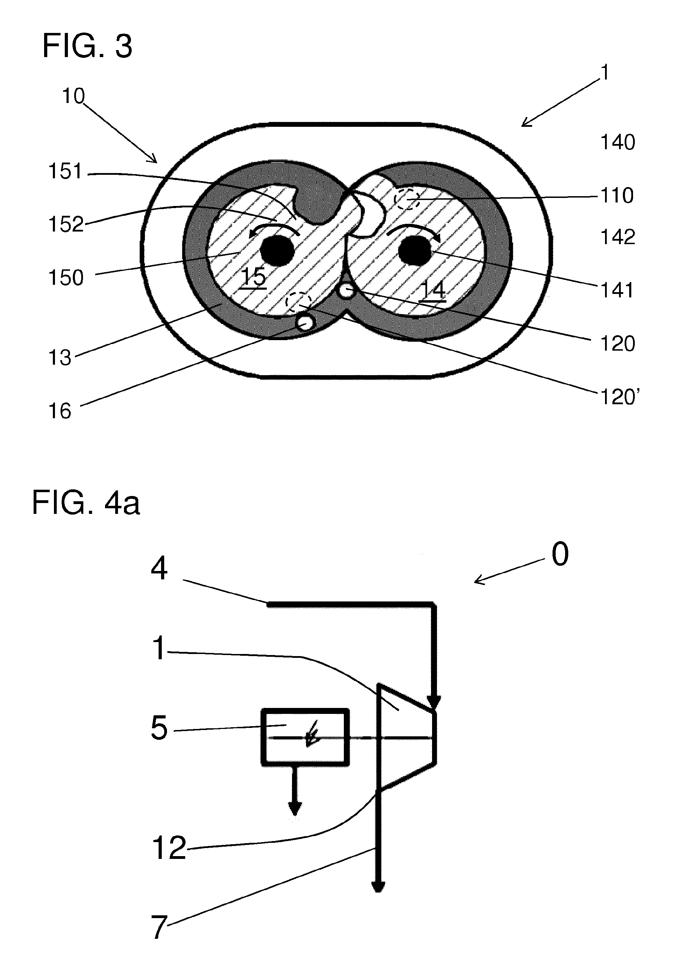

In einer speziellen Abwandlung der verwendeten Einklauenpumpe 1, kann während der Expansion gleichzeitig eine Kühlung des zu expandierenden Prozessfluids innerhalb des Innenraumes 13 vorgesehen durchgeführt werden. Eine derart abgewandelte Einklauenpumpe 1' ist in Figur 3 dargestellt. Dazu sind Kühlvorrichtungen 16, beispielsweise in Form mindestens einer Sprühdüse 16, die in den Innenraum 13 führen, angeordnet. Ein Kühlmittel, bevorzugt Wasser, kann während des Betriebs der Einklauenpumpe eingebracht werden, wodurch das Prozessfluid während der Expansion zusätzlich gleichzeitig im Innenraum 13 gekühlt wird.

Die Auslassöffnung 120' kann in einer weiteren Abwandlung derart positioniert sein, dass sie vom zweiten Rotor 15 überdeckt werden kann und nur in bestimmten Rotorstellungen geöffnet wird. Damit expandiertes und gekühltes Prozessfluid nur portionsweise entweichen kann. Dies ist mit einem gestrichelt dargestellten Kreis in Figur 3 angedeutet.

Im einfachsten Fall kann eine Generatorvorrichtung 0 aus einer Einklauenpumpe 1 gebildet sein, welche direkt an einen Prozessfluidkanal 4 angeschlossen wird, sodass elektrische Energie durch Rotation der Rotoren 14, 15 mittels eines Generators 5 generiert wird. Die Energie des energiegeladenen Prozessfluids wird entsprechend teilweise umgewandelt. Das expandierte Prozessfluid strömt aus der Einklauenpumpe 1, welche als Expander verwendet wird, durch eine Ausleitung 7 an die Umgebung abgegeben.

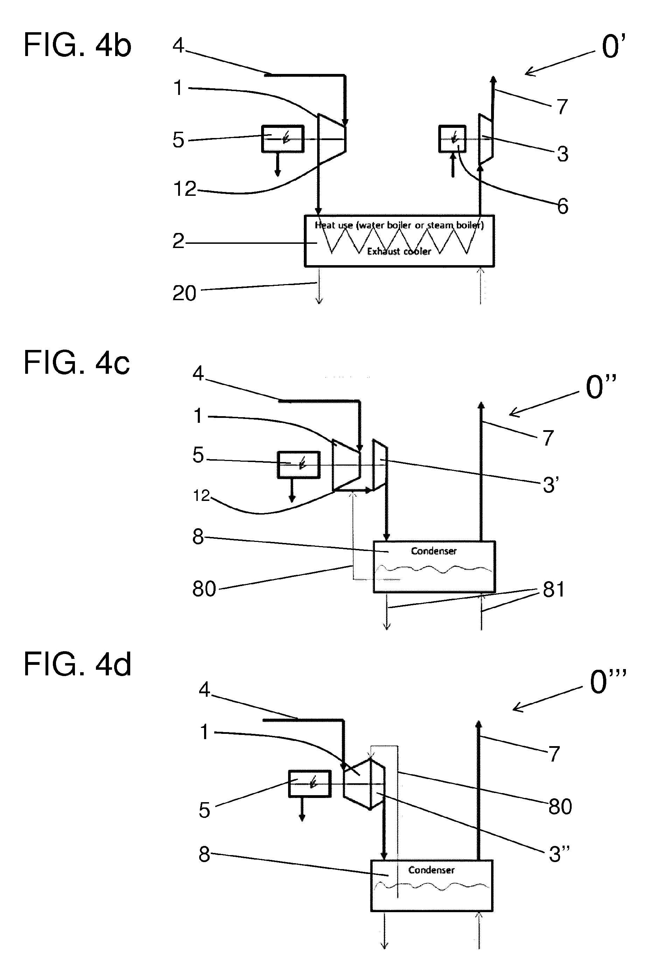

Es sind auch weitere komplexere Aufbauten erfindungsgemässer Generatorvorrichtungen 0 bzw. Arten der Verwendung von Einklauenpumpen 1 möglich, welche eine effizientere Erzeugung bzw. Umwandlung elektrischer Energie erlauben, wie in den Figuren 4b bis 4d gezeigt ist. Hier wird als energiegeladenes Prozessfluid ein Abgas mit einer Temperatur von 530°C verwendet, welches der Einklauenpumpe 1 als Teil unterschiedlicher Generatorvorrichtungen 0 zugeführt wird.

Eine Generatorvorrichtung 0' umfasst eine Einklauenpumpe 1 mit angeschlossenem Generator 5, einen von der Einklauenpumpe 1 beabstandeten Wärmetauscher 2 oder Kühler, sowie eine von der Einklauenpumpe 1 beabstandete Kompressionsvorrichtung 3 mit einem Netzgerät 6. Das energiegeladene Prozessfluid wird aus einem Prozessfluidkanal 4 in die Einklauenpumpe 1 geführt, dort expandiert, wobei Energie mittels Generator 5 umgewandelt wird und anschliessend wird das expandierte Prozessfluid in den Wärmetauscher 2 geleitet. Der Wärmetauscher 2 ist hier extern, also von der Einklauenpumpe 1 beabstandet als konventioneller Wärmetauscher ausgestaltet, wobei unterschiedliche Arten einsetzbar sind. Aus dem Wärmetauscher 2 wird expandiertes abgekühltes Prozessfluid anschliessend in die Kompressionsvorrichtung 3 geleitet und dort komprimiert, wobei Energie aufgewandt werden muss. Die Kompressionsvorrichtung 3 kann verschieden ausgestaltet sein, insbesondere ebenfalls als Einklauenpumpe 1.

Hier ist die grösstmögliche Flexibilität bezüglich der Anordnung der Gasleitungen, der Kühlerbauform und selbst der Drehzahlen möglich. So kann zum Beispiel die Kompressionsvorrichtung 3 in Form eines Kompressors 3 einen Unterdruck oder einen Abgasüberdruck über die Drehzahl regeln, während der Expander/die Einklauenpumpe 1 anderweitig im Betrieb optimiert werden kann. Auch kann die Dimensionierung einfacher an unterschiedliche Temperaturverhältnisse angepasst werden. Da die Kondensation bei Abgas, als energiegeladenes Prozessfluid von einem Erdgas/Biogasmotor erst etwa bei 33°C (im Teilvakuum, bei λ=1.7) erreicht wird, kann die Anlage ohne Bildung von Wasserdampf-Kondensat betrieben werden. Die Drei Takte bestehen dann aus quasi-adiabater Expansion, isobarer Abkühlung und quasi- adiabater Kompression.

Die Rückkompression in der Kompressionsvorrichtung 3 sollte mit expandiertem Prozessfluid mit Temperaturen < 70°C durchgeführt werden, damit sich der Prozess lohnt. D.h. es kann konventionell Wärme ausgekoppelt werden. Ein weiterer Vorteil dieser Generatorvorrichtung 0 ist der "quasi-unendlich" grosse Raum im Wärmetauscher 2 zwischen Expander 1 und Kompressionsvorrichtung 3. Dadurch beeinflussen Überströmverluste den Prozess nur indirekt - d.h. es wird zwar mehr Gas verbraucht, aber die Druckverhältnisse und der Kreisprozess insgesamt wird nicht verschlechtert, solange die Kompressionsvorrichtung 3 fähig ist, die grössere Gasmenge zu evakuieren.

In Figur 4c ist eine weitere Generatorvorrichtung 0" gezeigt, wobei die Einklauenpumpe 1 und die Kompressionsvorrichtung 3' im Gehäuse 10 der Einklauenpumpe 1 integriert sind. Das Gehäuse 10 ist unterteilt in eine Expansions- und eine kleinere Kompressionskammer.
Aus einem Prozessfluidkanal 4 wird energiegeladenes Prozessfluid in die Einklauenpumpe 1 geleitet und elektrische Energie mit dem Generator 5 generiert. Vom Auslass der Einklauenpumpe wird expandiertes Prozessfluid in die Kompressionsvorrichtung 3' geführt. Zwischen der Einklauenpumpe 1 und der Kompressionsvorrichtung 3' befindet sich eine Überströmöffnung mit einer Sprühkühlung. Aus einem Einspritzkondensator 8 wird ein Kühlmittel über eine Kühlmittelzuleitung 80 zugeführt, welches mit dem expandierten Prozessfluid gemischt wird. Das expandierte Prozessfluid wird damit zusätzlich gekühlt und anschliessend mittels Kompressionsvorrichtung 3' komprimiert. Nach Durchgang durch die Kompressionsvorrichtung 3' wird das zusätzlich abgekühlte Prozessfluid durch den Einspritzkondensator 8 geleitet, indem ein weiterer Anteil Wärmeenergie abgegeben wird. Schlussendlich wird das expandierte und gekühlte Prozessfluid durch eine Auslassleitung 7 als Abgas an die Umgebung abgegeben. Die Leitungen 81 dienen zur Versorgung des Einspritzkondensators 8 mit Kühlmittel.

Nach der Kompression sollte die Anlage soweit gekühlt werden, dass das eingesetzte Kühlwasser zurückgewonnen werden kann. Hier laufen die beiden Kammern synchron, sodass nur über die Länge der Einlassschlitze die Füllung, die Expansion und das Druckniveau geregelt werden kann, was komplexer ist. Die drei Takte bestehen dann aus: quasi-adiabater Expansion, polytroper Abkühlung, sowie isothermer oder adiabater Expansion.

In einer kompakteren Generatorvorrichtung 0"' wird energiegeladenes Prozessfluid über einen Prozessfluidkanal 4 in die Einklauenpumpe 1 geführt. Im Innenraum 13 der Einklauenpumpe 1 findet eine Kühlung durch Sprühnebel, sowie eine anschliessende Rückverdichtung statt. Das Kühlmittel wird aus dem Einspritzkondensator 8 direkt in den Innenraum der Einklauenpumpe 1 geführt. Durch die oben beschriebenen Sprühdüsen 16 der Einklauenpumpe 1, die in den Innenraum 13 münden, wird Kühlmittel, in der Regel Wasser zur Kühlung während der Expansion des Prozessfluids eingebracht.
Die drei Takte sind dann: quasi-adiabate Expansion, isochore Kühlung, isotherme Rückverdichtung.

Diese Generatorvorrichtungen 0, 0', 0", 0"' generieren mehr Energie, als zum Betrieb der Generatorvorrichtungen 0, 0', 0", 0"' nötig ist. Die Effizienz der Generatorvorrichtungen 0, 0', 0", 0"' ist dabei grösser als die Effizienz der aus dem Stand der Technik bekannten Vorrichtungen.

Die Einklauenpumpe 1 bzw. der Innenraum 13 und die Rotoren 14, 15 sind widerstandfähig gegen Dämpfe und Gase bei hohen Temperaturen. Da keine Ventile vorhanden sind, ist ein störungsfreierer Betrieb gewährleistet.

Apropos Dichtheit und Wärmedehnung: Die Rotoren 14, 15 und das Gehäuse 10 sind entweder sehr genau auf geringe Spaltbreiten ausgelegt, oder aber mit einem Material beschichtet, das ein anfängliches "Einschleifen" erlaubt, z.B. Kohlenstoff auf den Rotoren und eine härtere Oberfläche am Gehäuse. Allenfalls kann dieser Kohlenstoffhaltige Dichtstoff auch als Paste oder Puder zugeführt werden. Die Auslegung sieht vor, dass der erfindungsgemässe Expander 1 soweit thermisch isoliert ist, dass die Wärmedehnung am Rotor 14, 15 und Gehäuse 10 bei gleichen Materialien ähnliche Masse annimmt, oder aber der ungekühlte Rotor 14, 15 wird aus Kohlenstoff mit einem Dehnungskoeffizient von 0 bis 7 x 10-6 ausgelegt, sodass dann das gekühlte Gehäuse 10 aus einem Metall in einer ähnlichen Form und Grösse bleibt. Die tangentialen Überströmverluste zwischen den Rotoren 14, 15 und an den Klauenspitzen wird dadurch verringert, dass die Drehrichtung gegen die Überströmrichtung verläuft, sodass durch die Oberflächenrauhigkeit ein "Labyrinth-Dichtungseffekt entstehen könnte. Es wird von Spaltbreiten unter 0.1mm ausgegangen.

### Bezugszeichenliste

0 Generatorvorrichtung
1 Expander = Einklauenpumpe
   10 Gehäuse
      100 Kühlrippen (Luftkühlung)
   11 Einlass (energiegeladenes Proszessfluid)
      110 Einlassöffnung
   12 Auslass (expandiertes und/oder abgekühltes Prozessfluid) 120 Auslassöffnung
   13 Innenraum
   14 erster Rotor
      140 Klaue
      141 erste Rotorwelle
      142 erste Klauenaussparung
   15 zweiter Rotor
      150 Klaue
      151 zweite Rotorwelle
      152 zweite Klauenaussparung
   16 Kühlvorrichtung / Sprühdüse
A Teilraum
B Teilraum
G Getriebeseite
M Mediumanschlussseite
2 Wärmetauscher
   20 Wärmetauscherleitungen
3 Kompressionsvorrichtung
4 Prozessfluidkanal
5 Generator
6 Netzgerät
7 Auslassleitung
8 Einspritzkondensator/ wassergekühlter Kondensator
   80 Kühlmittelzuleitung Speisewasser ???

## Patentansprüche

1. Generatorvorrichtung (0), welche an einen Prozessfluidkanal (4) ankoppelbar ist und mit einem energiegeladenen Prozessfluid beaufschlagbar ist, zur Umwandlung elektrischer Energie aus dem energiegeladenen Prozessfluid,
**dadurch gekennzeichnet, dass**
die Generatorvorrichtung (0) eine Einklauenpumpe (1) aufweist, welche mit dem Prozessfluidkanal (4) verbindbar ist, sodass energiegeladenes Prozessfluid über mindestens einen Einlass (11) in einen Innenraum (13) der Einklauenpumpe (1)führbar ist und im Innenraum (13) durch Rotation eines ersten und zweiten Rotors (14, 15) expandierbar ist,
wobei die resultierende mechanische Energie mittels eines mit den Rotoren (14, 15) wirkverbundenen Generators (5) in elektrische Energie umwandelbar ist und anschliessend expandiertes Prozessfluid durch einen Auslass (12) aus der Einklauenpumpe (1) heraus, eine Auslassleitung (7) querend an die Umgebung abgebbar ist.

2. Generatorvorrichtung (0') gemäss Anspruch 1, wobei an den Auslass (12) der Einklauenpumpe (1) ein Wärmetauscher (2) beabstandet von der Einklauenpumpe (1) angeordnet ist, in welchen expandiertes Prozessfluid führbar ist, wobei an den Wärmetauscher (2) anschliessend eine Kompressionsvorrichtung (3) angeordnet ist, sodass expandiertes und gekühltes Prozessfluid rückkomprimierbar ist.

3. Generatorvorrichtung (0") gemäss Anspruch 1, wobei der Auslass (12) der Einklauenpumpe (1) in die Kompressionsvorrichtung (3') führt, wobei eine Sprühkühlung zwischen dem Auslass (12) und der Kompressionsvorrichtung (3') angeordnet ist, in welcher ein Kühlmittel aus einem Einspritzkondensator (8) über eine Kühlmittelzuleitung (80) zuführbar und mit expandiertem Prozessfluid mischbar ist.

4. Generatorvorrichtung (0") gemäss Anspruch 3, wobei der Auslass der Kompressionsvorrichtung (3) in den Einspritzkondensator (8) führt und expandiertes gekühltes Prozessfluid anschliessend durch die Auslassleitung (7) in die Umgebung abgebbar ist.

5. Generatorvorrichtung (0") gemäss Anspruch 3 oder 4, wobei die Einklauenpumpe (1) und die Kompressionsvorrichtung (3') in einem Gehäuse (10) der Einklauenpumpe (1) integriert sind, wobei eine Expansionskammer und eine Kompressionskammer im Gehäuse (10) ausgebildet sind.

6. Generatorvorrichtung (0"') gemäss Anspruch 1, wobei mindestens eine in den Innenraum (13) der Einklauenpumpe (1) führende Sprühdüse (16) angeordnet ist, mittels welcher das energiegeladene Prozessfluid im Innenraum (13) durch Zuführung eines Kühlmittels aus einem Einspritzkondensator (8) über eine Kühlmittelzuleitung (80) kühlbar ist, bevor das expandierte gekühlte Prozessfluid von der Einklauenpumpe (1) direkt anschliessend in die Kompressionsvorrichtung (3") und dann durch den beabstandeten Einspritzkondensator (8) und die Auslassleitung (7) in die Umgebung strömt.

7. Generatorvorrichtung (0) gemäss einem der Ansprüche 2 bis 6, wobei die Kompressionsvorrichtung (3, 3', 3") eine Einklauenpumpe ist.

8. Verfahren zur Expansion eines energiegeladenen Prozessfluids aus einem Prozessfluidkanal (4) zur Umwandlung mechanischer Energie in elektrische Energie,
**gekennzeichnet durch** die Schritte:
a) Zuführung des energiegeladenen Prozessfluids über mindestens einen Einlass (11) in einen Innenraum (13) einer Einklauenpumpe (1),
b) Expansion des energiegeladenen Prozessfluids **durch** synchronisierter Rotation eines ersten und zweiten Rotors (14, 15),
c) Umwandlung der mechanischen Energie in elektrische Energie und
d) Ausgabe des expandierten Prozessfluids an die Umgebung.

9. Verfahren nach Anspruch 8, wobei expandiertes Prozessfluid nach Schritt c) aus einem Auslass (12) der Einklauenpumpe (1) zur Abkühlung durch einen Wärmetauscher (2), welcher beabstandet von der Einklauenpumpe (1) angeordnet ist, durchgeleitet wird, bevor gekühltes expandiertes Prozessfluid in eine Kompressionsvorrichtung (3) geführt und dort rückkomprimiert wird, bevor Schritt d) erfolgt.

10. Verfahren nach Anspruch 8, wobei expandiertes Prozessfluid nach Schritt c) aus einem Auslass (12) der Einklauenpumpe (1) in eine Kompressionsvorrichtung (3') geführt wird, wobei eine Sprühkühlung zwischen dem Auslass (12) und der Kompressionsvorrichtung (3') durchgeführt wird, indem ein Kühlmittel aus einem Einspritzkondensator (8) über eine Kühlmittelzuleitung (80) zuführbar und mit expandiertem Prozessfluid gemischt wird, sodass gekühltes expandiertes Prozessfluid rückkomprimiert wird.

11. Verfahren nach Anspruch 10, wobei rückkomprimiertes Prozessfluid nach Durchführung durch den Einspritzkondensator (8) durch die Auslassleitung (7) in die Umgebung abgegeben wird.

12. Verfahren nach Anspruch 10 oder 11, wobei das Kühlmittel aus dem Einspritzkondensator (8) direkt mittels mindestens einer Sprühdüse (16) in den Innenraum (13) der Einklauenpumpe (1) geführt wird, sodass eine Kühlung während der Expansion erreichbar ist.

13. Verwendung einer Einklauenpumpe (1) zur Umwandlung von mechanischer Energie in elektrische Energie, wobei die Einklauenpumpe (1) als Teil einer Generatorvorrichtung (0, 0', 0", 0"') an einen, energiegeladenes Prozessfluid führenden Prozessfluidkanal (4) angekoppelt wird und die bei der Expansion des Prozessfluids in einem Innenraum (13) in mechanische Energie mittels eines ersten und eines zweiten Rotors (14, 15) auftretende mechanische Energie durch einen mit der Einklauenpumpe (1) wirkverbundenen Generator (5) in elektrische Energie umwandelbar ist.
